# EUROPÄISCHE PATENTSCHRIFT

(11) **EP 0 528 781 B1**
(45) Veröffentlichungstag und Bekanntmachung des Hinweises auf die Patenterteilung: **15.05.1996**
(21) Anmeldenummer: 92890132.1
(22) Anmeldetag: 29.05.1992
(51) Int. Cl.: E06B 5/16, E06B 3/66

(54) **Brandschutzverglasung**
Fire-resistant glazing
Vitrage pare-feu

(30) Priorität: 17.07.1991 AT 1433/91
(43) Veröffentlichungstag der Anmeldung: 24.02.1993
(73) Patentinhaber: BRÜDER ECKELT + CO. Glastechnik Gesellschaft m.b.H., A-4400 Steyr (AT)
(72) Erfinder: Dirisamer, Wolfgang, A-4020 Linz (AT); Eckelt, Christian, A-4400 Steyr (AT)
(74) Vertreter: Hübscher, Heiner, Dipl.-Ing.

(56) Entgegenhaltungen:
- EP-A- 0 136 676
- FR-A- 2 367 180

## Beschreibung

Die Erfindung bezieht sich auf eine Brandschutzverglasung mit einem in einem Halterahmen sitzenden Glasscheibenelement, dem eine Vorsatzscheibe aus Silikatglas zugeordnet und das unter Freilassung eines Dehnungsspielraumes im Halterahmen eingesetzt ist.

Bisher werden für Brandschutzverglasungen allgemein Glasscheibenelemente aus Borosilikatglas, Floatgläsern mit aufgebohrter Zwischenschicht oder Glaskeramik verwendet, welche Glasscheibenelemente wegen ihrer schwachen Wärmeaufnahmefähigkeit nur ein beschränktes Dehnungsverhalten zeigen und daher einer Hitzeeinwirkung im Brandfalle während der für eine Brandschutzverglasung erforderlichen Zeitspanne standhalten, bevor die auftretende Wärmedehnung den Bruch der im Halterahmen eingespannten Glasscheibenelemente verursacht. Diese Glasscheibenelemente sind aber recht aufwendig und teuer in ihrer Herstellung und führen bei Bruch zu einem gefährlichen Abfallen der Glasscherben.

Gemäß der FR-A-2 367 180 wurde auch schon eine Brandschutzverglasung aus wenigstens zwei Silikatglasscheiben vorgeschlagen, wobei eine Silikatglasscheibe aus vorgespanntem Glas und die andere mit Luftabstand dazu angeordnete Glasscheibe aus armiertem Silikatglas bestehen. Die Scheibe aus vorgespanntem Glas dient als eigentliche Brandschutzscheibe, die der Hitzeeinwirkung länger widerstehen soll als die andere, wobei aber auch die vorgespannte Scheibe zerspringt, wenn durch ungleichmäßige Aufheizung der Randbereich unter Zugspannungen gesetzt wird, die die Druckvorspannungen überschreiten. Um solche Zugspannungen zu vermeiden, muß daher die vorgespannte Scheibe auf ihrer gesamten Fläche bis zum Rand hin möglichst gleichmäßig erhitzt werden, wozu hier die vorgespannte Scheibe auf der hitzeabgewandten Seite vorgesehen ist und der Rand zur Abdeckung gegen die Hitzestrahlung im Halterahmen sitzt. Die brandseitig angeordnete armierte Glasscheibe dient zur Dämpfung des Wämremrahlendurchtrittes auf das Mittelfeld der vorgespannten Glasscheibe, so daß die Wärmebelastung vergleichmäßigt und das Entstehen von Zugspannungen vermindert wird. Diese Verglasung ist allerdings wegen der Notwendigkeit der Abstandhalter zwischen den Glasscheiben und des daran angepaßten Halterahmens ebenfalls recht aufwendig, verlangt den Einsatz einer vorgespannten Silikatglasscheibe als Brandschutzscheibe und einen bestimmten Aufbau der Glasscheibenelemente und bringt eine beträchtliche Verglasungsdicke mit sich.

Der Erfindung liegt daher die Aufgabe zugrunde, diese Mängel zu beseitigen und eine Brandschutzverglasung der eingangs geschilderten Art zu schaffen, die sich bei ausgezeichneter Schutzwirkung verhältnismäßig einfach und wirtschaftlich herstellen läßt.

Die Erfindung löst diese Aufgabe dadurch, daß die aus vorgespanntem Silikatglas bestehende Vorsatzscheibe brandseitig auf das Glasscheibenelement aufgeklebt ist und mit Abstand vor dem Halterahmen endet, wobei am Halterahmen einzelne vorstehende Haltezungen zur Abstützung der Vorsatzscheibe angeordnet sind. Um bei der brandseitigen Lage der vorgespannten Scheibe für eine gleichmäßige Erwärmung zu sorgen, wird die Scheibe bis zum Rand hin ohne größere Abdeckung der Hitze ausgesetzt und eignet sich so zum weitgehenden Aufbrauch auftretender Wärmeenergie, wodurch ein frühzeitiges Erwärmen des dahinterliegenden Glasscheibenelernentes verhindet wird. Dieses Glasscheibenelement kann daher auch aus weniger hitzebeständigem Glasmaterial wirtschaftlich hergestellt sein und hält dennoch im Brandfall der Hitzeeinwirkung stand. Das Glasscheibenelement besteht beispielsweise ebenfalls aus einem vorgespannten Silikatglas, es kann aber auch aus einem Mehrscheibenelement od. dgl. bestehen, und läßt sich in üblicher Weise im Halterahmen ohne dehnungsbedingte Bruchgefahr einsetzen. Zur Verklebung von Vorsatzscheibe und Glasscheibenelement werden Zwischenschichten aus Polyvinyl-Butyral-Folien, Gießharzen oder anderen organischen Kunststoffen verwendet, die in Verbindung mit den Scheiben eine erhöhte Temperaturwechselbeständigkeit, eine gesteigerte Schlag- und Stoßfestigkeit und eine verstärkte Bruchfestigkeit der Scheiben-Elementeneinheit mit sich bringen und bei Erhitzung unter zusätzlichem Wärmeverbrauch schmelzen. Durch die Haltezungen wird die Vorsatzscheibe mechanisch abgestützt, um bei einem Abschmelzen der Klebe-Zwischenschicht ein Herabfallen der Vorsatzscheibe zu verhindern, was vor allem bei Dachverglasungen wichtig ist. Durch die punktweise angesetzten Haltezungen kommt es dabei aber zu keiner großflächigeren Abschirmung der Vorsatzscheibe bei einer Hitzeeinwirkung, so daß die Vorsatzscheibe über ihre gesamte Fläche weitgehend gleichmäßig wärmebelastet wird und keine gefährlichen Temperaturdifferenzen innerhalb der Scheibe entstehen.

Wie bereits erwähnt, eignen sich verschiedene Einfach- oder Mehrfachglaser als Glasscheibenelement, doch ergibt sich eine besonders zweckmäßige Brandschutzverglasung dadurch, daß das Glasscheibenelement aus einem Isolierglaselement mit einer Verbundscheibe als eine der Deckscheiben besteht, wobei die Außenscheibe der Verbundscheibe gegenüber der Innenscheibe eine zurückspringende Randstufe bildet und als Vorsatzscheibe vorgesehen ist. Übliche Isolierglaselemente, deren eine Deckscheibe als Verbundscheibe ausgebildet ist, führen zu einer vorteilhaften Kombination von Glasscheibenelement und Vorsatzscheibe, welche Kombination rationell herstellbar ist und auf Grund der Randstufe gleichzeitig mit einer üblichen Einglasungsmöglichkeit den Dehnungsspielraum für die Vorsatzscheibe bietet. Es entsteht eine Brandschutzverglasung hoher Festigkeitswerte und bester Schutzwirkung.

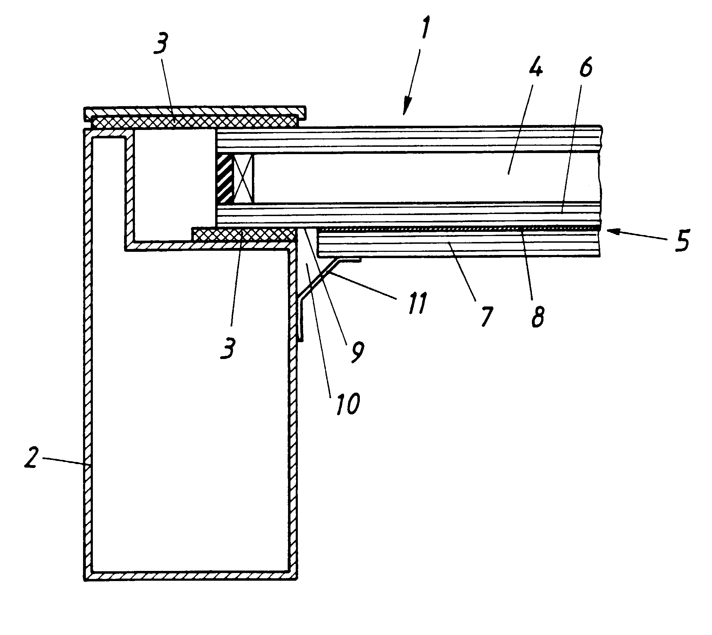

In der Zeichnung ist der Erfindungsgegenstand an Hand eines Querschnittes durch eine erfindungsgemäße Brandschutzverglasung beispielsweise veranschaulicht.

Eine Brandschutzverglasung 1 besteht aus einem Halterahmen 2, in dem unter Zwischenlage von Brandschutzlaminaten 3 ein Isolierglaselement 4 eingesetzt ist. Die brandseitige Deckscheibe dieses Isolierglaselementes 4 ist als Verbundscheibe 5 mit einer Innenscheibe 6 und einer Außenscheibe 7 aus vorgespanntem Silikatglas ausgebildet, wobei Innen- und Außenscheibe 6, 7 über eine Zwischenschicht 8 miteinander verklebt sind. Die Außenscheibe 7 ergibt gegenüber der Innenscheibe 6 eine zurückspringende Randstufe 9 und dient als wärmedämmende Vorsatzscheibe für das Isolierglaselement 4. Auf Grund der Randstufe 9 verbleibt zwischen dem Halterahmen 2 und der Vorsatzscheibe 7 ein entsprechend großer Dehnungsspielraum 10, so daß sich die Außenscheibe 7 bei Hitzeeinwirkung ungehindert ausdehnen kann und der Hitzeeinwirkung standhält. Zur mechanischen Abstützung der Außenscheibe 7 sind am Halterahmen 2 einzelne vorstehende Haltezungen 11 angeordnet, die beim Abschmelzen der Zwischenschicht 8 ein Herabfallen der Außenscheibe 7 verhindern, wobei die einzelnen Haltezungen 11 keine wesentliche Beeinträchtigung der Hitzebeaufschlagung der Vorsatzscheibe mit sich bringen.

Da die als Vorsatzscheibe dienende Außenscheibe 7 im Brandfall die entstehende Hitze aufnimmt und sich wegen des Dehnungsspielraumes 10 dabei auch ungehindert ausdehnen kann, wird das dahinterliegende Isolierglaselement 4 vor einer übermäßigen Hitzebelastung geschützt und kann die Aufgaben einer Brandschutzverglasung voll erfüllen.

## Patentansprüche

1. Brandschutzverglasung (1) mit einem in einem Halterahmen (2) sitzenden Glasscheibenelement (4), dem eine Vorsatzscheibe (7) aus Silikatglas zugeordnet und das unter Freilassung eines Dehnungsspielraumes (10) im Halterahmen (2) eingesetzt ist, dadurch gekennzeichnet, daß die aus vorgespanntem Silikatglas bestehende Vorsatzscheibe (7) brandseitig auf das Glasscheibenelement (4) aufgeklebt ist und mit Abstand vor dem Halterahmen (2) endet, wobei am Halterahmen (2) einzelne vorstehende Haltezungen (11) zur Abstützung der Vorsatzscheibe (7) angeordnet sind.

2. Brandschutzverglasung nach Anspruch 1, dadurch gekennzeichnet, daß das Glasscheibenelement aus einem Isolierglaselement (4) mit einer Verbundscheibe (5) als eine der Deckscheiben besteht, wobei die Außenscheibe der Verbundscheibe (5) gegenüber deren Innenscheibe (6) eine zurückspringende Randstufe (9) bildet und als Vorsatzscheibe (7) vorgesehen ist.

## Claims

1. Fire-resistant glazing (1) having a glass pane element (4) mounted in a retaining frame (2) and having an associated supplementary pane (7) of silicate glass and being inserted in the retaining frame (2) with an expansion clearance (10), characterised in that the supplementary pane (7) consisting of toughened silicate glass is stuck on to the glass pane element (4) on the fire side and terminates with a gap before the retaining frame (2), individual projecting retaining tongues (11) for supporting the supplementary pane (7) being provided on the retaining frame (2).

2. Fire-resistant glazing according to claim 1, characterised in that the glass pane element consists of an insulating glass element (4) having a laminated pane (5) as one of the surface panes, the outer pane of the laminated pane (5) forming a re-entrant edge step (9) with respect to the inner pane (6) and being provided as the supplementary pane (7).

## Revendications

1. Vitrage pare-feu (1) avec un élément à panneau de verre (4), siégeant dans un cadre de maintien (2) et auquel est associé un panneau avant (7) réalisé en verre au silicate, et qui est inséré dans la cadre de maintien (2), en laissant subsister un espace de jeu de dilatation (10), caractérisé en ce que le panneau avant (7), constitué de verre au silicate trempé, est appliqué par collage, du côté feu, sur l'élément à panneau en verre (4) et s'achève à distance devant le cadre de maintien (2), des languettes de maintien (11) individuelles, faisant saillie, étant disposées sur le cadre de maintien (2) en vue de soutenir le panneau avant (7).

2. Vitrage anti-feu selon la revendication 1, caractérisé en ce que l'élément à panneau en verre est constitué d'un élément en verre isolant (4) ayant un panneau composite pour constituer l'un des panneaux de couverture, le panneau extérieur du panneau composite (5) créant un étagement de bordure (9), placé en retrait par rapport à son panneau intérieur (6), et est prévu pour faire office de panneau avant (7).
